# EUROPÄISCHE PATENTSCHRIFT

(11) **EP 2 655 985 B1**
(45) Veröffentlichungstag und Bekanntmachung des Hinweises auf die Patenterteilung: **25.02.2015**
(21) Anmeldenummer: 11801544.5
(22) Anmeldetag: 20.12.2011
(51) Int. Cl.: F24J 2/04, F24J 2/46, F24J 2/40, E06B 3/67, E06B 3/663, F24J 2/42

(54) **FASSADENELEMENT**
FACADE ELEMENT
ÉLÉMENT DE FAÇADE

(30) Priorität: 23.12.2010 CH 21632010
(43) Veröffentlichungstag der Anmeldung: 30.10.2013
(73) Patentinhaber: Glassx AG, 8005 Zürich (CH)
(72) Erfinder: BERTSCH, Stefan, CH-9000 St. Gallen (CH); OPPLIGER, Daniel, CH-9465 Salez (CH); MENZI, Tobias, CH-8757 Filzbach GL (CH)
(74) Vertreter: Clerc, Natalia
(86) Internationale Anmeldenummer: PCT/CH2011/000304
(87) Internationale Veröffentlichungsnummer: WO 2012/083471

(56) Entgegenhaltungen:
- EP-A1- 2 123 856
- EP-A2- 1 529 921
- WO-A1-03/040631
- WO-A1-2006/059071
- WO-A1-2007/009503
- WO-A1-2009/095031
- WO-A2-2010/083834
- DE-A1- 2 815 056
- DE-A1-102008 064 010
- DE-U1-202005 015 303
- FR-A1- 2 405 444
- US-A- 4 050 443
- US-A- 4 216 765
- US-A1- 2007 084 460
- US-B1- 6 201 313

## Beschreibung

### TECHNISCHES GEBIET

Die vorliegende Erfindung betrifft ein Fassadenelement gemäss Oberbegriff des Patentanspruchs 1.

### STAND DER TECHNIK

Es ist bekannt, transparente oder transluzente Wärmedämmschichten, welche für gerichtete und diffuse Sonnenstrahlung durchlässig sind, in Fassadenelementen zu verwenden. Solarenergie lässt sich so gezielt zum Heizen von Gebäuden einsetzen. Zusätzlich oder alternativ lässt sich das Gebäudeinnere vor Wärmestrahlung schützen. Diese Fassadenelemente können einerseits Teile der Wand bilden und auf ihrer zum Gebäude hin gerichteten Rückseite an ein Mauerwerk oder eine andere Art von Gebäudewand angrenzen oder sie können selber eine zum Gebäudeinnenraum hin undurchsichtige Gebäudewand bilden. Diese Fassadenelemente können jedoch auch transparent ausgebildet sein und somit ein Fenster des Gebäudes bilden.

WO 98/51973 offenbart eine Vorrichtung zur transparenten Wärmedämmung an einem Gebäude mit drei Scheiben. Der dem Gebäudeinnern zugekehrte Zwischenraum ist mit einem wärmeisolierenden Gas und der äussere Zwischenraum mit einer zirkulierenden Flüssigkeit gefüllt. Diese Flüssigkeit, beispielsweise Wasser, absorbiert infrarotes Licht, ist aber für sichtbares Licht transparent ausgebildet. Dadurch lässt sich das Gebäudeinnere im Sommer gegen Erwärmung von aussen schützen. Ferner ist ein erweitertes System offenbart, welches eine vierte Scheibe und einen zweiten zum Gebäudeinnern hin gerichteten Hohlraum aufweist. Von Sonnenlicht im ersten Hohlraum erwärmte Flüssigkeit erwärmt einen Wärmespeicher. Dieser gibt bei Bedarf Wärme an einen zweiten Kreislauf ab, an welchem der zweite Hohlraum angeschlossen ist. Dadurch lässt sich das Gebäude beheizen.

DE 10 2004 059 897 zeigt ein Fenster mit einer Lichtdurchflusssteuerung. Eine Flüssigkeit zirkuliert durch ein Rohrsystem, welches innerhalb des Fensters verlegt ist. Um das Fenster zu verdunkeln sind Partikel vorhanden, welche der durch das Fenster zirkulierenden Flüssigkeit gezielt zudosiert oder entnommen werden. Diese Stoffe können Pigmente mit magnetischen und/oder metallischen und/oder dekorativen Eigenschaften sein.

US 4 515 150 offenbart ein Fassadenelement mit zwischen zwei Scheiben angeordneten Führungskanälen für die zirkulierende Flüssigkeit. Die Flüssigkeit kann metallische Partikel oder eine magnetische Substanz aufweisen. Es wird vorgeschlagen, an den Seiten des Fassadenelements Magnetspulen anzubringen, um die Orientierung der Partikel zu beeinflussen und damit die Lichtdurchlässigkeit des Fassadenelements verändern soll.

EP 2 123 856 zeigt ein Fassadenelement zur aktiven transparenten Wärmedämmung mit einer zusätzlichen Wassersäule im Fensterrahmen, welche den Druck im Fenster reduzieren soll.

Diese Fassadenelemente weisen den Nachteil auf, dass sie für eine industrielle effiziente und kostengünstige Fertigung schlecht geeignet sind.

Aus WO 2007/009503 ist ein Fassadenelement gemäß Oberbegrif des Patentanspruchs 1 bekannt, es offenbart ein Fenster oder ein anderes Bauelement mit einer Temperaturbarriere in Form eines Flüssigkeitskreislaufes. Das Zuleitungsrohr weist gleichmässig verteilte Öffnungen auf, um die Flüssigkeit gleichmässig durch den Scheibenzwischenraum strömen zu lassen. Auf den Öffnungen können Aufsätze aufgesetzt sein.

### DARSTELLUNG DER ERFINDUNG

Es ist deshalb eine Aufgabe der Erfindung, ein Fassadenelement zur Wärmedämmung zu schaffen, welches diesen Nachteil behebt.

Diese Aufgabe löst ein Fassadenelement mit den Merkmalen des Patentanspruchs 1.

Vorzugsweise ist das Fassadenelement als Fenster ausgebildet und somit für sichtbares Licht durchsichtig.

Vorzugsweise ist das Fassadenelement Teil einer aktiven transparenten oder transluzenten Wärmedämmungseinheit, in welcher ein Fluid in einem geschlossenen Kreislauf durch mindestens einen Hohlraum des Fassadenelements gepumpt wird. Dieses Fluid hat vorzugsweise die Eigenschaft, dass es mindestens Infrarotstrahlung absorbiert und somit einem Wärmetauscher bzw. Wärmespeicher Wärme abgeben kann. Vorzugsweise besteht das Fluid aus Wasser oder im Wesentlichen aus Wasser mit Additiven, welche beispielsweise Algenbildung und ähnliches verhindern sollen und/oder welche ein Gefrieren des Wassers vermeiden sollen. Die Scheiben sind beide vorzugsweise aus durchsichtigem Glas.

Vorzugsweise sind mindestens drei, vier oder fünf Scheiben, insbesondere genau vier Scheiben, vorhanden, wobei zwei fluiddurchströmte Hohlräume vorhanden sind, welche von je zwei Scheiben gebildet sind. Dadurch lässt sich Wärme, welche von einem ersten Fluid durch Absorption der Solarstrahlung gewonnen wurde, in einen Wärmespeicher abgeben. Diese Wärme kann mittels eines zweiten Fluids in den zweiten Hohlraum gezielt eingebracht werden. Das Gebäude lässt sich dadurch mittels eines Regelkreises gezielt kühl halten bzw. heizen. Vorzugsweise hält das zweite Fluid die in das Gebäudeinnere ragende Oberfläche der innersten Scheibe konstant auf einer gewünschten Temperatur, die leicht unterhalb oder oberhalb der Raumtemperatur liegt je nach Kühl oder Heizfunktion.

In einer bevorzugten Ausführungsform dient das Fassadenelement als Verschattung, Sonnenkollektor, Heizung und Kühlelement in einem.

Vorteilhaft ist ausserdem, dass sich das Fassadenelement relativ dünn ausbilden lässt. Typische Dicken für ein 4-Scheibensytem liegen bei 4 - 7 cm.

Ein erfindungsgemässes Fassadenelement zur Wärmedämmung weist mindestens zwei parallel zueinander angeordnete Scheiben, einen zwischen diesen zwei Scheiben ausgebildeten, fluiddurchströmten Hohlraum sowie mindestens einen Einlass zur Zuführung eines strahlungsabsorbierenden Fluids und mindestens einen Auslass zum Abführen des Fluids auf. Der Einlass ist an einer ersten Seite der Scheiben und der Auslass ist an einer gegenüberliegenden zweiten Seite der Scheiben angeordnet. Erfindungsgemäss ist zwischen dem mindestens einen Einlass und dem Hohlraum ein erster Strömungsverteiler angeordnet, welcher sich entlang der Länge der ersten Seite verteilt erstreckt wobei der Strömungsverteiler ein Band ist, welches Erhebungen und/oder Vertiefungen aufweist, welche für das Fluid Durchgänge vom Einlass zum Hohlraum bilden.

Dieser Strömungsverteiler vermeidet oder reduziert eine Verwirbelung der einströmenden Flüssigkeit, so dass die Flüssigkeit gleichmässig den Hohlraum durchströmt und sich insbesondere vollständig in ihm verteilt.

Dank der gleichmässigen Verteilung im Hohlraum ist die Absorption der Solarenergie optimiert. Des Weiteren lässt sich bei Verwendung von Verdunklungspartikeln oder Pigmenten eine gleichmässige und vollständige Verdunklung des Fassadenelements erzielen.

Vorzugsweise ist dieser erste Strömungsverteiler lediglich in einem Randbereich der Scheiben angeordnet. Vorzugsweise ist der Hohlraum bis auf seine Randbereiche frei von Strömungsverteilern. Der Hohlraum beansprucht vorzugsweise eine Fläche, welche einen wesentlichen Teil der Scheiben, insbesondere 90-95% einer gesamten Scheibenfläche beträgt.

Vorzugsweise weist der erste Strömungsverteiler Düsen auf, durch welche das Fluid in den Hohlraum geleitet wird. Diese Düsen lassen sich in einem Randbereich des Hohlraums anordnen.

In einer bevorzugten Ausführungsform weist der erste Strömungsverteiler in Strömungsrichtung mehrere Eingangsöffnungen mit einem ersten Öffnungswinkel und einem Einlassweg und mehrere Ausgangsöffnungen mit einem zweiten Öffnungswinkel und einem Auslassweg. Der erste Öffnungswinkel ist wesentlich grösser als der zweite Öffnungswinkel und der Einlassweg ist wesentlich kürzer als der Auslassweg. Diese Form bildet eine spezielle Art Düsen, welche eine Verwirbelung des Fluids verhindern und gleichzeitig den Druckverlust des Fluids gering halten. Dadurch ergibt sich eine geringe Pumpenleistung.

Vorzugsweise sind diese Erhebungen und/oder Vertiefungen tropfenförmig ausgebildet. Die Erhebungen und/oder Vertiefungen können auf einer einzigen Seite des Bands angeordnet sein. Sie können jedoch auch beidseitig des Bandes angeordnet sein. Das Band mit ein- oder zweiseitigen Erhebungen und/oder Vertiefungen lässt sich auf einfache und kostengünstige Weise herstellen und im Fassadenelement montieren.

Vorzugsweise verschliesst dieses Band die zwei Scheiben zwischen Einlass und Hohlraum bis auf die Durchgänge dichtend. Dadurch lassen sich weitere Zugänge des Fluids in den Hohlraum vermeiden, welche wiederum eine Verwirbelung zulassen könnten.

Vorzugsweise ist das Band aus Kunststoff oder einem Metall gefertigt, insbesondere aus Aluminium.

In einer bevorzugten Ausführungsform weist das Fassadenelement mehrere Einlässe auf, welche entlang der ersten Seite der Scheiben verteilt angeordnet sind. Je nach Grösse des Fassadenelements können mehr oder weniger Einlässe vorhanden sein. Dies ermöglicht eine gezielte Zufuhr des Fluids sowohl betreffend Durchflussmenge wie auch betreffend Vermeidung von Verwirbelung.

In vertikaler bestimmungsgemässer Gebrauchslage des Fassadenelements bildet die genannte erste Seite, welche den ersten Strömungsverteiler aufweist, vorzugsweise die unterste Seite des Fassadenelements in seiner vertikalen Gebrauchslage. Das Fluid strömt somit von unten nach oben.

In einer bevorzugten Ausführungsform ist zwischen Hohlraum und Auslass ein zweiter Strömungsverteiler angeordnet. Dieser vermeidet eine Verwirbelung des Fluids bei dessen Austritt aus dem Hohlraum. Insbesondere bei hohen Fassadenelementen ist dies vorteilhaft.

Vorzugsweise ist der zweite Strömungsverteiler gleich ausgebildet wie der erste Strömungsverteiler. Er ist jedoch vorzugsweise spiegelsymmetrisch wie in der Skizze dargestellt oder gleichgerichtet wie der erste Strömungsverteiler angeordnet.

Es können ein oder mehrere Auslässe vorhanden sein. Im Falle von mehreren Auslässen sind diese vorteilhaft über die zweite Seite verteilt angeordnet.

In einer weiteren erfindungsgemässen Ausführungsform sind mindestens zwei parallel zueinander angeordnete Scheiben, ein zwischen diesen zwei Scheiben ausgebildeter, fluiddurchströmter Hohlraum sowie mindestens ein Einlass zur Zuführung eines strahlungsabsorbierenden Fluids und mindestens ein Auslass zum Abführen des Fluids vorhanden. Der Einlass ist an einer ersten Seite der Scheiben und der Auslass ist an einer gegenüberliegenden zweiten Seite der Scheiben angeordnet. Erfindungsgemäss ist ein Dichtring zwischen den zwei Scheiben angeordnet, welcher den Hohlraum begrenzt und ihn nach aussen dichtet, wobei zwischen Dichtring und Aussenseite ein Abstand zwischen den zwei Scheiben vorhanden ist, der mit einem Kleber verschlossen ist. Dieser Dichtring schützt den Kleber vor Wasser, so dass herkömmliche Kleber verwendet werden können.

Diese Ausführungsform lässt sich mit den oben genannten Merkmalen der übrigen Ausführungsformen beliebig kombinieren.

Diese Ausführungsform weist den Vorteil auf, dass der Hohlraum mit einer kostengünstigen und doch langanhaltenden Dichtung versehen ist, selbst wenn der Hohlraum von einer Flüssigkeit, insbesondere von Wasser, durchströmt ist. Da das Fluid im Hohlraum lediglich den Dichtring, nicht aber den Kleber kontaktiert, kann ein kostengünstiger und marktüblicher Kleber verwendet werden, wie er üblicherweise zur Verklebung und Dichtung von normalen Glasfenstern eingesetzt wird. Insbesondere lässt sich Silikon oder Zweikomponentenklebstoff verwenden. Der Dichtring ist vorzugsweise aus Kautschuk oder Neopren gefertigt. Vorzugsweise ist der Dichtring eine Schnur, insbesondere eine Rundschnur, welcher vorzugsweise überlappend oder in sich geschlossen ausgebildet ist. Eine weitere Variante ist das direkte Aufspritzen der Dichtschnur mittels Roboter. Dies ermöglicht eine vollautomatische Anbringung des Dichtrings mittels Roboter und vereinfacht die Fertigung des Fassadenelements.

Die Stabilität des Scheibenverbundes und die Dichtheit lasen sich erhöhen, wenn über den Umfang der zwei Scheiben verteilt Distanzhalter oder Distanzelemente angeordnet sind, welche zwischen Dichtring und Kleber und/oder innerhalb des Klebers angeordnet sind. Diese Distanzelemente verhindern eine Bewegung der zwei Scheiben relativ zueinander und vermeiden somit eine Spannung auf den Kleber. Vorzugsweise sind die Distanzelemente mit mindestens einer der beiden Scheibenflächen fest verbunden, beispielsweise verklebt, verlötet oder verschweisst. Als Distanzelemente eignen sich beispielweise zylinderförmige Stifte aus Metall, Kunststoff oder Glas.

Ein erfindungsgemässes Fassadenelementsystem weist mindestens ein Fassadenelement und ein Fluidkreislaufsystem zum Durchströmen des mindestens einen Fassadenelements mit mindestens einem Fluid auf. Dem Fluid sind Verdunkelungspartikel beimischbar oder beigemischt. Erfindungsgemäss sind die Verdunkelungspartikel Magnetteilchen und/oder photochrome Partikel und/oder elektrochrome Partikel.

Durch die Verteilung im Fluid ermöglichen sie eine flächige, in der Dunkelheit einstellbare Verdunkelung. In einer bevorzugten Ausführungsform lässt sich durch eine Veränderung der Partikel von 0%vol bis 10%vol eine Verdunklung von 0% bis zu 100% erreichen.

Magnetteilchen weisen den Vorteil auf, dass sie im Fluidkreislaufsystem während des Betriebs dem Fluid bzw. der Flüssigkeit beimischbar und auch wieder aus dem Fluid entfernbar sind. Vorteilhaft ist, dass sich diese Magnetteilchen in einem Abscheider auf einfache Art und Weise mittels eines Magnetfelds wieder aus dem Fluid entfernen lassen. Dabei sind sie für den nächsten Einsatz ohne weitere Aufbereitung wieder einsatzbereit.

Anstelle oder zusätzlich zu den Magnetpartikeln lassen sich auch photochrome und/oder elektrochrome Pigmente verwenden, um das Fassadenelement zu verdunkeln. Diese Pigmente sind dem Fluid beigemischt, wobei sie im Fluid verbleiben und nicht wie die Magnetpartikel gezielt abgeschieden werden. Photochrome Pigmente lassen sich durch Erhöhung der Lichteinstrahlung aktivieren. Elektrochrome Pigmente lassen sich durch elektrische Spannung steuern.

Zwar sind elektrochrome und photochrome Beschichtungen von Gläsern bekannt. Da derartige Pigmente jedoch einem Alterungsprozess durch UV-Licht unterliegen, sind derartige Gläser nicht allzu lange einsetzbar. Das Beimischen der Pigmente in die Flüssigkeit hat nun den Vorteil, dass sie zusammen mit der Flüssigkeit gewartet und erneuert werden können.
Als Fassadenelement für dieses System eignen sich insbesondere, aber nicht ausschliesslich Fassadenelemente gemäss den oben genannten Ausführungsformen bzw. Kombinationen davon.

Vorzugsweise weisen die Magnetteilchen eine Grösse von 50 nm bis 1000 nm auf. Es handelt sich somit um Nanopartikel. Vorteil von Partikeln dieser Grössenordnung ist, dass sie sich einerseits noch magnetisch verhalten und durch ein Abscheidesystem aus der Lösung getrennt werden können. Zudem sind sie klein genug, um vom Betrachter nicht einzeln wahrgenommen zu werden. Die Verdunkelung ist somit gleichmässig. Letztlich sind die Bindungen zwischen den Partikeln in dieser Grössenordnung gering genug um wieder aufgespaltet werden zu können. Dadurch kann ein sogenanntes Clustering (Verklumpen) in der Scheibe gesteuert werden.

Vorzugsweise sind die Magnetteilchen schwarz, um eine farbneutrale Verdunklung zu erzeugen. Sie können jedoch jede beliebige Farbe aufweisen, wenn das Fassadenelement nicht verdunkelt sondern zur optischen Gestaltung eine andere Farbe annehmen soll. Dies kann insbesondere zu besonderen Anlässen, insbesondere zur Adventszeit zu optisch attraktiven Fassadenbildern führen. Es kann auch zu Werbezwecken verwendet werden. Vorzugsweise liegen die Magnetteilchen zwecks genügender Verdunkelung des Fassadenelements in einer Konzentration von 0%vol bis 10%vol im Fluid vor. Um die Bindung zwischen den Magnetteilchen zu reduzieren weist das Fluid vorzugsweise einen pH-Wert von 3 bis 11 auf.

Vorzugsweise weisen die Magnetteilchen eine Oberfläche auf, welche unbehandelt oder mit einer dünnen Kunststoffschicht überzogen ist. Auch dies reduziert die Bindungskraft zwischen den Magnetteilchen.

Vorzugsweise sind dem Fluid zusätzlich zu den Magnetteilchen noch Additive (Zusätze) beigemengt, um ebenfalls die Bindung zwischen den Magnetteilchen zu reduzieren.

Eine Clusterbildung lässt sich vermeiden, indem die Verweilzeit im Fenster kontrolliert wird und im Fluidkreislauf, vorzugsweise bei Eintritt in den Hohlraum zwischen den Scheiben eine Zerstäubung der verketteten Partikel erfolgt. Diese Zerstäubung kann durch hohe Scherkräfte in statischen Mischern, Düsen oder Pumpen erreicht werden.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figur 1: eine schematische Darstellung eines erfindungsgemässen Fassadenelementsystems im Sommer;
- Figur 2: das Fassadenelementsystem gemäss Figur 1 im Winter;
- Figur 3: eine schematische Darstellung eines erfindungsgemässen Scheibenpaars eines Fassadenelements in perspektivischer Darstellung;
- Figur 4: eine schematische Darstellung eines erfindungsgemässen Fassadenelements in perspektivischer Darstellung;
- Figur 5: einen Querschnitt durch einen Randbereich des Scheibenpaars gemäss Figur 3 in vergrösserter Darstellung;
- Figur 6: eine vergrösserte Darstellung eines Eckbereichs des Scheibenpaars gemäss Figur 3;
- Figur 7: eine schematische Darstellung der Wirkungsweise eines erfindungsgemässen Strömungsverteilers;
- Figur 8: eine vergrösserte Darstellung eines Teils des Strömungsverteilers gemäss Figur 7 von oben;
- Figur 9: einen Querschnitt durch einen Teil des Strömungsverteilers gemäss Figur 8 entlang A-A und
- Figur 10: einen Querschnitt durch eine Scheibe des Fassadenelements gemäss Figur 3 im Bereich eines Einlasses.

### BESCHREIBUNG BEVORZUGTER AUSFÜHRUNGSFORMEN

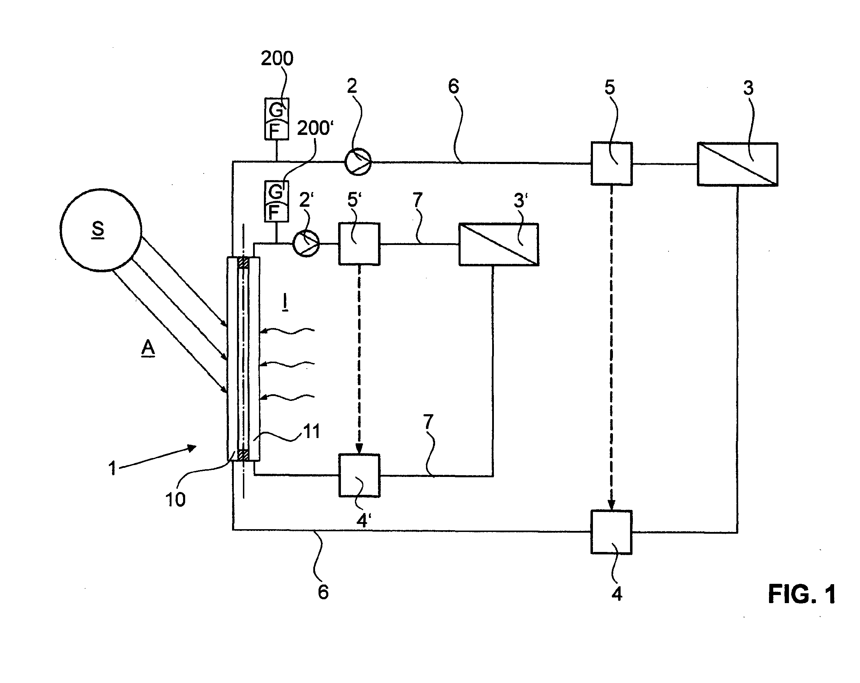

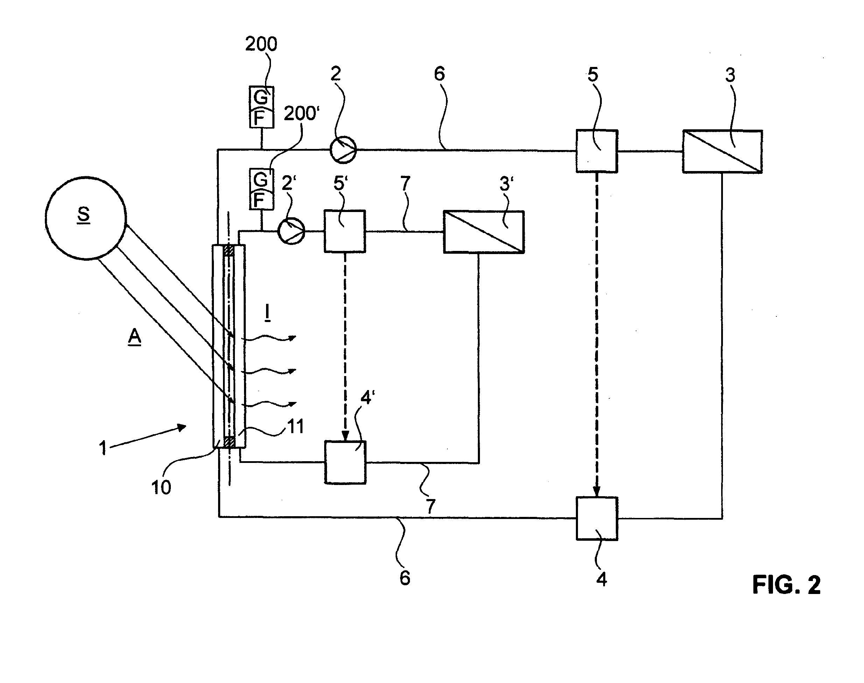

Das erfindungsgemässe Fassadenelementsystem verwendet die in WO 98/51973 beschriebenen Erkenntnisse. In den Figuren 1 und 2 ist das Grundprinzip dargestellt.

Zwei Scheibenpaare 10, 11 sind parallel und beabstandet zueinander angeordnet. Die Scheiben bestehen vorzugsweise alle aus durchsichtigem Glas, so dass das Fassadenelement ein Fenster eines Gebäudes sein kann.

Jedes Scheibenpaar 10, 11 besteht aus zwei Scheiben, welche beabstandet zueinander angeordnet sind und zwischen ihnen einen ersten bzw. zweiten Hohlraum bilden. Das Scheibenpaar mit dem Bezugszeichen 10 ist in Bezug zum Gebäude zur Aussenseite A hin gerichtet und umschliesst den äusseren Hohlraum, das andere Scheibenpaar mit dem Bezugszeichen 11 ist zum Gebäudeinnern I hin gerichtet und umschliesst den inneren Hohlraum.

Zwischen den zwei Scheibenpaaren 10, 11 ist ein dritter Hohlraum 12 vorhanden, welcher zur thermischen Trennung dient. Er ist hierfür vorzugsweise mit einem wärmeisolierenden Gas gefüllt, beispielsweise mit Krypton oder Xenon. Er kann auch evakuiert sein. Alternativ oder zusätzlich kann in diesem dritten Hohlraum eine weitere Scheibe vorhanden sein, um die Isolation zu verbessern.

Es sind vorzugsweise zwei getrennt voneinander regelbare Kreisläufe 6, 7 vorhanden, welche je einen Hohlraum der Scheibenpaare 10, 11 mit einem Fluid durchströmen lassen. Dabei fliesst das Fluid bei vertikal ausgerichteten Fassadenelementen vorzugsweise von der Unterseite des Fassadenelements vertikal nach oben. Sind die zwei Kreisläufe getrennt voneinander geregelt, so ist vorzugsweise auch die Apparatur doppelt ausgeführt. Das heisst, dass wie in den Figuren gezeigt vorzugsweise jeder Kreislauf mit einer separaten Pumpe, einem separaten Abscheider, einem separatem Dosierer und einem separaten Wärmetauscher versehen ist. Es ist jedoch auch möglich, dass die zwei Kreisläufe einige oder alle dieser Elemente miteinander teilen.

Das Fluid ist vorzugsweise Wasser. Es kann mit Additiven versehen, welche verhindern, dass störende Ablagerungen gebildet werden, wie beispielsweise Algenbildung und/oder Ausfällen von Substanzen. Zusätzlich oder alternativ wird verhindert, dass das Wasser gefriert. Infrarot wird absorbiert und in Wärme umgewandelt, sichtbares Licht kann das Fluid vorzugsweise ungehindert passieren. Das Fluid kann insbesondere auch ein Flüssigkeitsgemisch auf Wasserbasis oder eine andere Flüssigkeit sein. Wie nachfolgend noch dargelegt ist, kann es mit weiteren Additiven und Partikeln versehen sein.

In den zwei Kreisläufen 6, 7 ist im dargestellten Beispiel mindestens je ein Wärmetauscher 3,3' angeordnet. Beide Kreisläufe 6, 7 sind vorzugsweise mit getrennten Wärmetauschern 3, 3' verbunden, sie können jedoch auch mit einem gemeinsamen Wärmetauscher verbunden sein. Es kann zudem ein Wärmespeicher vorhanden sein.

In den Kreisläufen 6, 7 ist hier je eine Pumpe 2, 2' vorhanden, um das Fluid durch den jeweiligen Hohlraum zu pumpen. Auch hier sind vorzugsweise zwei getrennte Pumpen 2, 2' verwendet. Es kann jedoch auch eine gemeinsame Pumpe eingesetzt sein. Die Pumpen 2, 2' sind vorzugsweise Saugpumpen, welche das Fluid aus dem Hohlraum ansaugen und so den Druck im jeweiligen Hohlraum reduzieren. Nicht dargestellte Ventile regeln den Durchfluss durch den äusseren und inneren Hohlraum. Eine nicht dargestellte elektronische Steuereinheit und nicht dargestellte Temperatur- und Durchflusssensoren regeln die Unter- bzw. Übertemperatur des Fluids bezüglich der Temperatur im Gebäudeinnern je nachdem ob gekühlt oder geheizt wird durch Regelung des Durchflusses in den zwei Hohlräumen. Die Reglung des Absorptionsgrads kann beispielsweise über die Partikelkonzentration erfolgen. Je höher die Partikelkonzentration, desto höher ist das Absorptionsvermögen des Fluids.

Die Pumpen 2, 2' lassen sich nicht nur für den Transport des Fluids einsetzen, sondern auch um dabei einen Unterdruck in den Hohlräumen 103 zu erzeugen. Zur Erzeugung lassen sich alternativ oder zusätzlich auch Expansionsgefässe 200, 200' einsetzen. Diese weisen eine Gasseite G und eine Fluidseite F auf, welche über eine Membran voneinander getrennt sind. Die Membran ist in der Figur mit einer geschwungenen Linie im Gefäss 200, 200' dargestellt. Gasseitig G herrscht ein Unterdruck, welcher über die Membran an die Fluidseite F und somit in die Kreisläufe 6, 7 und die Hohlräume 103 übertragen wird.

Mindestens im äusseren Kreislauf 6, welcher den äusseren Hohlraum bedient, ist ein erster Dosierer 4 sowie ein erster Partikelabscheider 5 vorhanden. Im ersten Dosierer 4 lassen sich Partikel zur Verdunkelung des äusseren Hohlraums in das Fluid einbringen. Im ersten Abscheider 5 werden sie wieder aus dem Kreislauf entfernt.

Es lassen sich auch in den zweiten inneren Kreislauf 7 Partikel zur Verdunkelung oder zur Farbänderung des inneren Hohlraums einbringen. Es ist jedoch auch möglich, dass im Betrieb keine Veränderung der Fluidzusammensetzung vorgenommen wird. Im dargestellten Beispiel sind im inneren Kreislauf 7 ein entsprechender zweiter Dosierer 4' und zweiter Abscheider 5' vorhanden.

Die Anordnung von Dosierer 4, 4' und Abscheider 5,5' in den Figuren 1 und 2 ist rein schematisch. Dosierer 4, 4' und Abscheider 5, 5' können an einer einzigen Stelle in den zwei Kreisläufen 6, 7angeordnet sein. Die gestrichelten Pfeile in den Figuren zwischen Dosierer 4, 4' und Abscheider 5, 5' zeigen schematisch den Weg der auf dem Fluid abgeschiedenen Metallpartikel zur erneuten Verwendung im Dosierer 4, 4'.

Der innere und der äussere Kreislauf 6 und 7 verlaufen getrennt voneinander. Sie können in einer einfachen Ausführungsform über einen gemeinsamen Wärmetauscher 3 und/oder dem Wärmespeicher miteinander verbunden sein. Vorzugsweise verlaufen sie jedoch vollständig getrennt voneinander und jeder weist einen getrennten Wärmetauscher 3, 3' auf.

Im Sommer lässt sich zum Beispiel der äussere Kreislauf, welcher sehr warm ist, als Vorwärmer für thermisch getriebene Kältemaschinen einsetzen. Der innere Kreislauf kann im Sommer gleichzeitig zu Kühlzwecken kühl sein. Im Winter ist die Anordnung umgekehrt. Die äussere Flüssigkeitsschicht kann sehr kalt sein, während die innere Schicht zum Heizen warm ist.

In Figur 1 ist die Situation im Sommer dargestellt. Im äusseren Kreislauf 6 zirkulieren Partikel und verdunkeln das äussere Scheibenpaar 10. Infrarotstrahlung der Sonne S wird vom Fluid im äusseren Scheibenpaar 10 absorbiert und als Wärme dem Wärmespeicher abgegeben. Vorzugsweise ist zudem das Scheibenpaar 10 durch Beigabe von Verdunkelungspartikeln im Fluid verdunkelt, so dass auch sichtbares Licht absorbiert bzw. reflektiert wird und nicht oder nur reduziert ins Gebäudeinnere I gelangen kann. Im inneren Kreislauf 7 kann zusätzlich gekühltes Fluid durch das innere Scheibenpaar 11 strömen und so das Gebäudeinnere kühlen.

Im Winter hingegen findet keine Verdunkelung des äusseren Scheibenpaares 10 statt. D.h. die Verdunklungspartikel sind aus dem äusseren Fluid entfernt. Nach wie vor wird jedoch Infrarotstrahlung der Sonne S vom äusseren Fluid absorbiert und über den Wärmetauscher an den inneren Kreislauf abgegeben. Diese Wärme wird dazu genutzt, das innere Scheibenpaar 11 zu heizen und somit die Wärme an das Gebäudeinnere I abzugeben. Zudem kann auch der äussere Scheibenzwischenraum entleert werden, um die solare Strahlung direkt auf das innere Scheibenpaar 11 durchzuführen. Dadurch wird die Wärme direkt innerhalb des Gebäudes umgesetzt. Des Weiteren ist es bei unzureichendem Strahlungseinfall möglich, den Hohlraum des inneren Scheibenpaars 11 zu verwenden, um Wärme von einem Speicher oder einer anderen Wärmequelle an das Gebäudeinnere abzugeben.

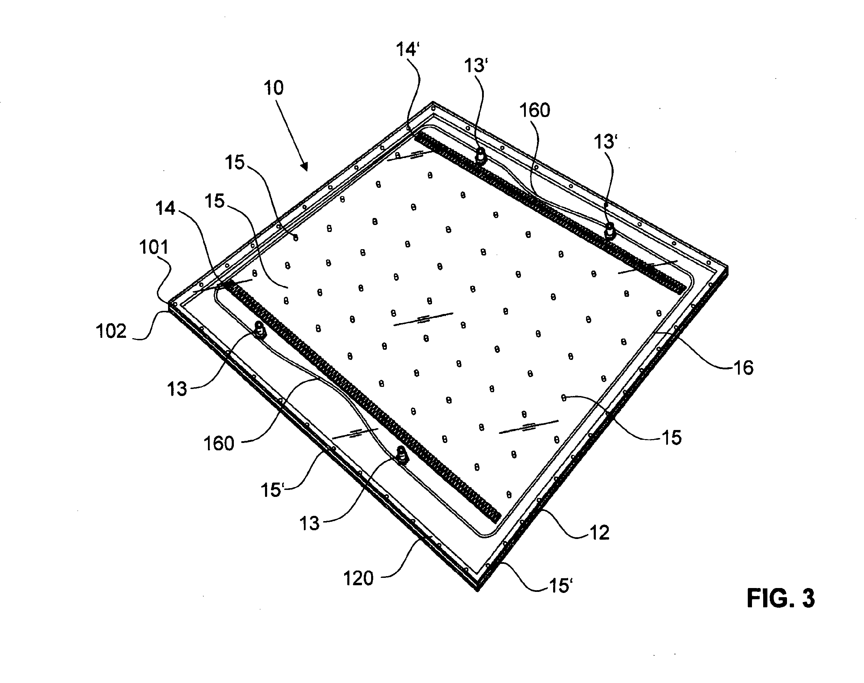

In Figur 3 ist schematisch ein erfindungsgemässes Scheibenpaar dargestellt, wie es im oben beschriebenen System zum Einsatz kommt. Es kann sich um das erste oder zweite Scheibenpaar 10, 11 handeln. Vorzugsweise sind beide identisch ausgebildet. Eine erste Scheibe 101 verläuft planparallel, aber beabstandet zu einer zweiten Scheibe 102. Beide Scheiben sind aus Glas und vorzugsweise durchsichtig ausgebildet. Sie können zum Hohlraum hin ein oder zwei infrarote Strahlung reflektierende Schichten aufweisen, um den Hohlraum besser zu isolieren.

Zwischen den zwei Scheiben 101, 102 ist ein Hohlraum 103 gebildet, welcher von einem umlaufenden, in sich geschlossenen Dichtring 16 begrenzt ist. Der Dichtring 16 ist vorzugsweise eine Rundschnur, insbesondere aus Kautschuk oder Neopren. Der Dichtring 16 ist so dick bemessen, dass er den Abstand zwischen den zwei Scheiben 101, 102 ausfüllt und somit den Hohlraum 103 nach aussen dichtet.

Zwischen Dichtring 16 und Aussenseite des Scheibenpaars 10 ist ein Kleber 120 vorhanden. Dieser erstreckt sich um den gesamten Umfang des Scheibenpaars 10. Vorzugsweise verläuft er im äussersten Randbereich der Scheiben 101, 102. Als Kleber 120 lassen sich dank des Dichtrings 16 bekannte Kleber für normale Fenster einsetzen, insbesondere Silikon

Der Abstand zwischen Kleber 120 und Dichtring 16 ist in Figur 3 relativ gross dargestellt. Dies dient lediglich zum besseren Verständnis. Der Kleber 120 kann unmittelbar oder mit geringem Abstand an den Dichtring 16 angrenzen, so dass der Randbereich, bestehend aus Dichtring 16 und Kleber 120 relativ schmal ausgebildet sein kann. Er kann insbesondere 10 bis 30 mm betragen.

Distanzelemente 15 sind im Hohlraum 103 angeordnet und halten die zwei Scheiben 101, 102 auf einem konstanten Abstand zueinander. Als Distanzelemente eignen sich beispielsweise zylinderförmige Stifte aus Metall, Glas, Keramik oder Kunststoff. Sie sind vorzugsweise mit einer der beiden Scheiben 101, 102 fest verbunden, insbesondere verklebt oder verschweisst. Die Distanzelemente sind so klein bemessen, dass sie beim Betrachten des Fensters kaum wahrgenommen werden. Sie weisen vorzugsweise einen Durchmesser von 1 bis 3mm, vorzugsweise von annähernd 1 mm auf.

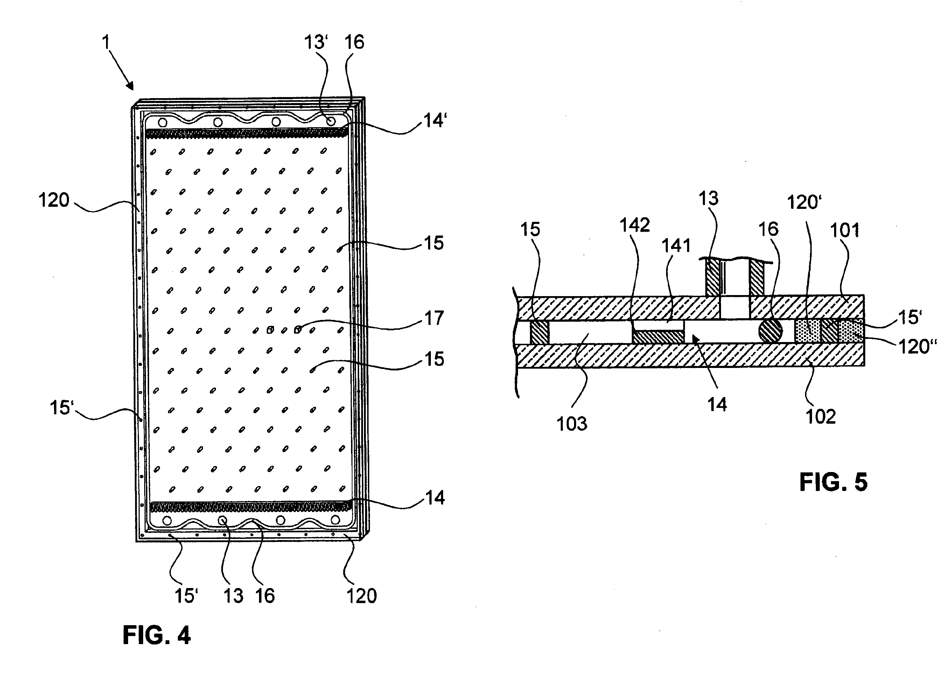

Auch im Randbereich sind vorzugsweise randseitige Distanzelemente 15' vorhanden. Diese können identisch ausgebildet sein wie die Distanzelemente 15 im Hohlraum 103. In Figur 5 ist eine bevorzugte Anordnung dargestellt. Der Kleber 120 ist in einen inneren Kleberbereich 120' und einen äusseren Kleberbereich 120" unterteilt. Zwischen diesen zwei umlaufenden Klebebereichen 120', 120" sind die randseitigen Distanzelemente 15' angeordnet.

Das Scheibenpaar 10 ist, wie dies in Figur 3 gut erkennbar ist, mit mindestens einem Einlass 13 und mindestens einem Auslass 13' versehen. Hierfür sind im Bereich des Hohlraums 103, d.h. innerhalb der vom Dichtring umschlossenen Fläche, entsprechende Anschlusselemente 13, 13' in die erste Scheibe 101 eingelassen und schaffen so eine Verbindung von aussen zum Hohlraum 103, wie dies in Figur 5 gut erkennbar ist. Diese Einlässe 13 und Auslässe 13' sind mit dem Kreislauf 6, 7 verbunden und lassen somit das Fluid in den Hohlraum 103 hinein- und wieder hinausströmen.

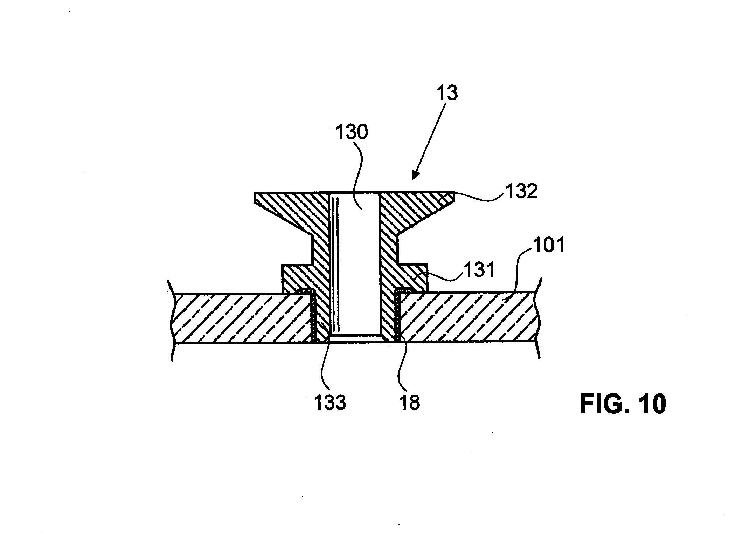

Eine bevorzugte Ausführungsform eines derartigen Einlasses 13 ist in Figur 10 dargestellt. Der Auslass 13' kann identisch ausgebildet sein. Der Einlass 13 und der Auslass 13' müssen mit dem Glas der Scheibe 101 dichtend verbunden sein. Die dargestellte Form hat sich hierbei als bevorzugt erwiesen. Der Einlass 13 weist einen Stutzen 133 auf, welcher in eine Öffnung der Scheibe 101 eingesteckt wird. Dem Stutzen 133 folgt ein Anschlag 131 in Form eines umlaufenden Flansches, welcher auf der Aussenseite der Scheibe 101 aufliegt. Sowohl diese Auflagefläche wie auch die Berührungsfläche des Mantels des Stutzens 133 mit der Glasscheibe 101 ist gedichtet. Die entsprechenden Mittel zur Erstellung der Dichtungen sind in Figur 10 mit den Bezugszeichen 18, 18' versehen. 18 bezeichnet eine Dichtfuge, insbesondere für eine Dichtung mit Silikon. 18' bezeichnet beispielsweise eine Klebefuge für eine Klebung. Der direkte Kontakt zwischen Kleber und Fluid wird somit vermieden. Alternativ kann auch Ultraschallverschweissung eingesetzt werden. Die Anschlusshülse 132 kann eine beliebige Form aufweisen und muss lediglich zur einfachen Verbindung mit dem Kupplungsteil der Leitung geeignet sein.

Wie in den Figuren 3 und 4 erkennbar ist, verläuft der Dichtring 16 im Bereich zwischen zwei Einlässen 13 bzw. zwei Auslässen 13' in einem Bogen 160. Dabei ist der Bogen zum Hohlraum 103 hin gerichtet. Es können entsprechende Bögen 160 auch zwischen den Ein/Auslässen 13, 13' und dem Rand des Scheibenpaars vorhanden sein. Die Bögen 160 haben sich im Zusammenhang mit einem nachfolgend beschriebenen erfindungsgemässen Strömungsverteiler 14 als vorteilhaft für die Vermeidung von Turbulenzen im Fluid erwiesen.

Der einlassseitige Strömungsverteiler 14 ist bandförmig ausgebildet und erstreckt sich vorzugsweise über die gesamte Breite des Hohlraums 103, zumindest annähernd. In diesem Ausführungsbeispiel ist er aus einem Metall gefertigt, vorzugsweise aus Aluminium. Er befindet sich zwischen Einlass 13 und restlichem Hohlraum 103. Der Dichtring 16 berührt mit seinen Bögen 160 annähernd den Strömungsverteiler 14.

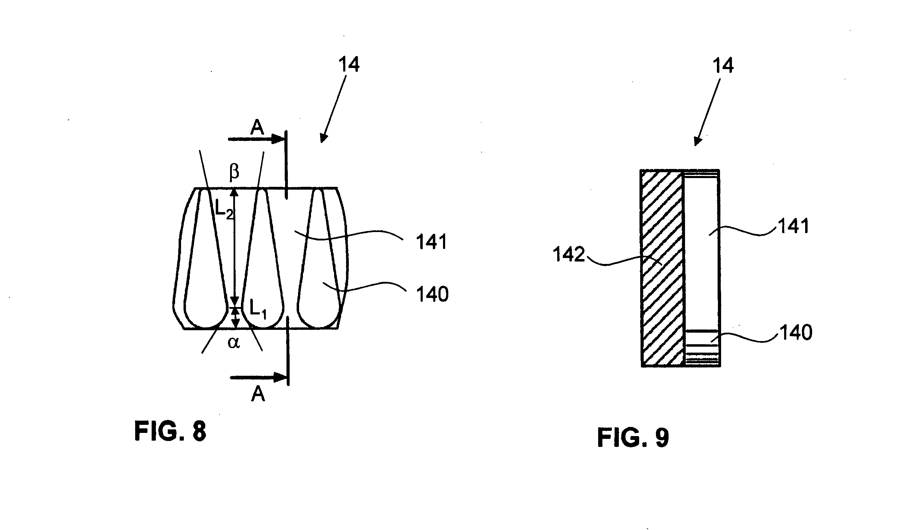

In den Figuren 5, 6, 8 und 9 sind Ausschnitte des Strömungsverteilers 14 in vergrösserter Darstellung sichtbar. Er füllt den Abstand zwischen den zwei Scheiben 101, 102 aus, so dass er beide Scheiben 101, 102 berührt, wie dies in Figur 5 erkennbar ist. Dabei lässt er jedoch Durchgänge 141 zwischen dem Einlass 13 und dem Hohlraum 103 frei. Diese Durchgänge 141 sind als Düsen ausgebildet. Hierfür weist der Strömungsverteiler 14 Erhebungen 140 auf, welche beabstandet zueinander entlang des Bandes angeordnet sind und ihre Abstände somit die Durchgänge bzw. Durchlässe 141 bilden. Der untere Bereich 142, welcher zur zweiten Scheibe 102 hin gerichtet ist, ist dabei durchgehend geschlossen ausgebildet.

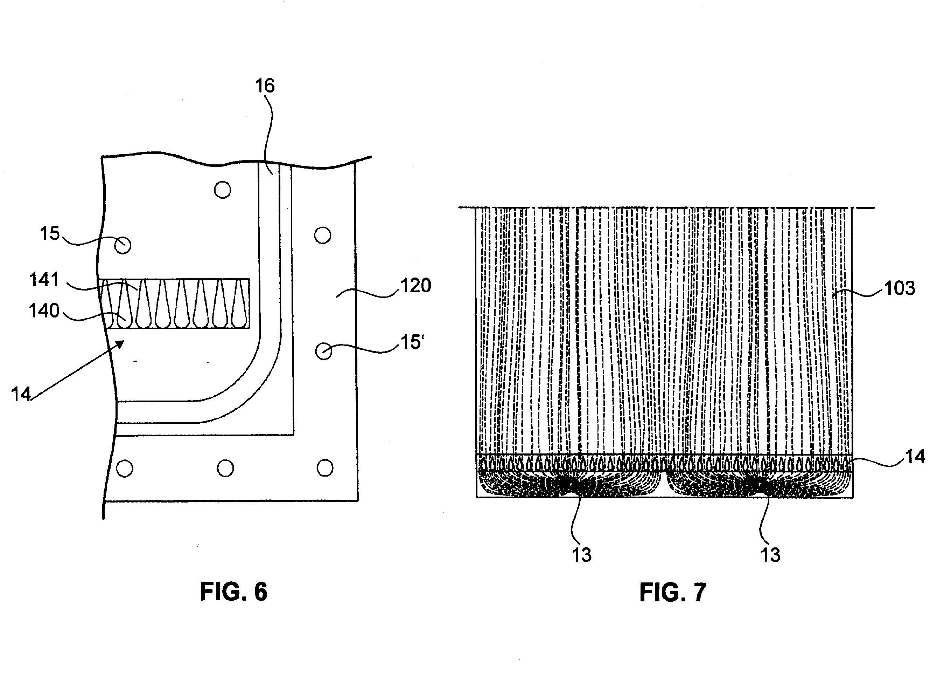

Die Erhebungen 140 sind tropfenförmig ausgebildet. Sie bilden einen kurzen Eingangsbereich L₁ mit einem Einlasswinkel α und einen langen Ausgangsbereich L₂ mit einem Auslasswinkelβ. Der Einlasswinkel α ist dabei wesentlich grösser als der Auslasswinkelβ. Diese Form führt zu einer Beruhigung des Flusses und verhindert somit Verwirbelungen des Fluids beim Eintritt in den Hohlraum 103. Zugleich ermöglicht dieser Strömungsverteiler 14 die gleichmässige Verteilung des Fluids, insbesondere der wässrigen Flüssigkeit, im Hohlraum 103. Das Strömungsverhalten ist in Figur 7 schematisch dargestellt. Dabei ist erkennbar, wie die Bögen 160 des hier nicht dargestellten Dichtrings 16 das Fluid beim Ausströmen aus dem Einlass 13 in Richtung Strömungsverteiler 14 und somit in Richtung Hohlraum 103 lenken.

Vorzugsweise ist auch im Bereich der Auslässe 13' ein Strömungsverteiler 14' angeordnet. Dieser ausgangsseitige Strömungsverteiler 14' ist vorzugsweise identisch ausgebildet wie der eingangsseitige Strömungsverteiler 14. Er ist in diesem Beispiel jedoch spiegelsymmetrisch angeordnet, d.h. der grosse Winkelbereich α mit der kurzen Strecke L₁ ist zum Hohlraum hingerichtet, der kleine Winkelbereich β mit der langen Strecke L₂ ist zu den Auslässen 13' hin gerichtet. Die Anordnung kann jedoch auch symmetrisch sein, so dass der ausgangsseitige Strömungsverteiler 14' gleich ausgerichtet ist wie der eingangsseitige Strömungsverteiler 14. Diese symmetrische Anordnung reduziert den Druckverlust und somit die Pumpleistung.

Das zweite Scheibenpaar 11 ist vorzugsweise identisch ausgebildet.

Diese oben beschriebenen Scheibenpaare 10, 11 lassen sich vorzugsweise verdunkeln, wobei sich hierzu Partikel bekannter Art verwenden lassen. Vorzugsweise werden hierfür jedoch Magnetteilchen verwendet. In Figur 4 sind zwei derartige Partikel symbolisch sowie stark vergrössert dargestellt und mit der Bezugziffer 17 versehen. Vorzugsweise werden die Magnete in Form von Nanopartikeln verwendet, die dem Fluid beigemischt werden können, um die Scheiben zu verdunkeln. Je nach Beimischungsgrad ergibt sich eine leichtere oder stärkere Abdunklung.

Das erfindungsgemässe Fassadenelement und das erfindungsgemässe Fassadenelementsystem ermöglichen eine einfache und kostengünstige industrielle Fertigung.

**BEZUGSZEICHENLISTE**

| | | | |
|---|---|---|---|
| 1 | Fassadenelement | 18 | Dichtung |
| 10 | äusseres Scheibenpaar | 18' | Klebung / Schweissung |
| 11 | inneres Scheibenpaar | 2 | erste Pumpe |
| 12 | dritter Hohlraum | 2' | zweite Pumpe |
| 101 | erste Scheibe | 200 | erstes Expansionsgefäss |
| 102 | zweite Scheibe | 200' | zweites Expansionsgefäss |
| 103 | Hohlraum | 3 | erster Wärmetauscher |
| 120 | Kleber | 3' | zweiter Wärmetauscher |
| 120' | innerer Kleberbereich | 4 | erster Dosierer |
| 120" | äusserer Kleberbereich | 4' | zweiter Dosierer |
| 13 | Einlass | 5 | erster Partikelabscheider |
| 13' | Auslass | 5' | zweiter Partikelabscheider |
| 130 | Einlassöffnung | 6 | äusserer Kreislauf |
| 131 | Anschlag | 7 | innerer Kreislauf |
| 132 | Anschlusshülse | α | erster Einlasswinkel |
| 133 | Stutzen | β | zweiter Einlasswinkel |
| 14 | erster Strömungsverteiler | L₁ | Einlassweg |
| 14' | zweiter Strömungsverteiler | L₂ | Auslassweg |
| 140 | Erhebung | A | Aussenseite des Gebäudes |
| 141 | Durchlass | I | Innenseite des Gebäudes |
| 142 | unterer Bereich | S | Sonne |
| 15 | Distanzelement | G | Gasseite des |
| 15' | randseitiges Distanzelement | | Expansionsgefässes |
| 16 | Dichtring | F | Fluidseite des |
| 160 | Bogen | | Expansionsgefässes |
| 17 | Magnetteilchen | | |

## Patentansprüche

1. Fassadenelement zur Wärmedämmung mit mindestens zwei parallel zueinander angeordneten Scheiben (101, 102), einem zwischen diesen zwei Scheiben (101, 102) ausgebildeten, fluiddurchströmten Hohlraum (103) sowie mit mindestens einem Einlass (13) zur Zuführung eines strahlungsabsorbierenden Fluids und mindestens einem Auslass (13') zum Abführen des Fluids, wobei der Einlass (13) an einer ersten Seite der Scheiben (101, 102) angeordnet ist und der Auslass (13') an einer gegenüberliegenden zweiten Seite der Scheiben (101, 102) angeordnet ist, wobei zwischen dem mindestens einen Einlass (13) und dem Hohlraum (103) ein erster Strömungsverteiler (14) angeordnet ist, welcher sich entlang der Länge der ersten Seite verteilt erstreckt, **dadurch gekennzeichnet, daß** der Strömungsverteiler (14) ein Band ist, welches Erhebungen (140) und/oder Vertiefungen aufweist, welche für das Fluid Durchgänge (141) vom Einlass (13) zum Hohlraum (103) bilden.

2. Fassadenelement nach Anspruch 1, wobei der erste Strömungsverteiler (14) Düsen (141) aufweist, durch welche das Fluid in den Hohlraum (103) geleitet ist.

3. Fassadenelement nach einem der Ansprüche 1 oder 2, wobei der erste Strömungsverteiler (14) in Strömungsrichtung mehrere Eingangsöffnungen mit einem ersten Öffnungswinkel (α) und einem Einlassweg (L₁) und mehrere Ausgangsöffnungen mit einem zweiten Öffnungswinkel (β) und einem Auslassweg (L₂) aufweist, wobei der erste Öffnungswinkel (α) wesentlich grösser ist als der zweite Öffnungswinkel (β) und der Einlassweg (L₁) wesentlich kürzer ist als der Auslassweg (L₂).

4. Fassadenelement nach Anspruch 1, wobei das Band (14) die zwei Scheiben (101, 102) zwischen Einlass (13) und Hohlraum (103) bis auf die Durchgänge (141) dichtend verschliesst.

5. Fassadenelement nach einem der Ansprüche 1 bis 4, wobei die Erhebungen (140) tropfenförmig ausgebildet sind.

6. Fassadenelement nach einem der Ansprüche 1 bis 5, wobei das Band (14) aus Kunststoff oder aus einem Metall, insbesondere aus Aluminium gefertigt ist.

7. Fassadenelement nach einem der Ansprüche 1 bis 6, wobei mehrere Einlässe (13) vorhanden sind, welche entlang der ersten Seite der Scheiben (101, 102) verteilt angeordnet sind.

8. Fassadenelement nach einem der Ansprüche 1 bis 7, wobei die erste Seite die unterste Seite des Fassadenelements in seiner vertikalen Gebrauchslage ist.

9. Fassadenelement nach einem der Ansprüche 1 bis 8, wobei zwischen Hohlraum (103) und Auslass (13') ein zweiter Strömungsverteiler (14') angeordnet ist.

10. Fassadenelement nach Anspruch 9, wobei der zweite Strömungsverteiler (14') gleich ausgebildet ist wie der erste Strömungsverteiler (14) und gleich oder spiegelsymmetrisch ausgerichtet ist.

11. Fassadenelement nach einem der Ansprüche 1 bis 10, wobei mehrere Auslässe (13') vorhanden sind, welche über die zweite Seite verteilt angeordnet sind.

12. Fassadenelement nach einem der Ansprüche 1 bis 11, wobei das Fassadenelement mindestens zwei parallel zueinander angeordnete Scheiben (101, 102), einen zwischen diesen zwei Scheiben (101, 102) ausgebildeten, fluiddurchströmten Hohlraum (103) sowie mindestens einen Einlass (13) zur Zuführung eines strahlungsabsorbierenden Fluids und mindestens einen Auslass (13') zum Abführen des Fluids aufweist, wobei der Einlass (13) an einer ersten Seite der Scheiben (101, 102) angeordnet ist und der Auslass (13') an einer gegenüberliegenden zweiten Seite der Scheiben (101, 102) angeordnet ist, **dadurch gekennzeichnet, dass** ein Dichtring (16) zwischen den zwei Scheiben (101, 102) angeordnet ist, welcher den Hohlraum (103) begrenzt und ihn nach aussen dichtet, und dass zwischen Dichtring (16) und Aussenseite ein Abstand zwischen den zwei Scheiben (101, 102) vorhanden ist, welcher mit einem Kleber (120) verschlossen ist.

13. Fassadenelement nach Anspruch 12, wobei der Kleber (120) Silikon oder ein Zweikomponentenkleber ist.

14. Fassadenelement nach einem der Ansprüche 12 oder 13, wobei der Dichtring (16) eine Rundschnur ist.

15. Fassadenelement nach einem der Ansprüche 1 bis 14, wobei über den Umfang der zwei Scheiben (101, 102) verteilt Distanzelemente (15, 15') angeordnet sind, welche im Hohlraum und/oder zwischen Dichtring (16) und Kleber (120) und/oder innerhalb des Klebers (120) angeordnet sind.

## Claims

1. A facade element for thermal insulation comprising at least two panes (101, 102) arranged parallel to one another, a cavity (103) which is formed between these two panes (101, 102) and has fluid flowing through it, and at least one inlet (13) for feeding in a radiation-absorbing fluid and at least one outlet (13') for discharging the fluid, wherein the inlet (13) is arranged on a first side of the panes (101, 102) and the outlet (13') is arranged on an opposite, second side of the panes (101, 102), wherein a first flow distributor (14) is arranged between the at least one inlet (13) and the cavity (103) and extends in a distributed manner along the length of the first side, **characterized in that** the flow distributor (14) is a strip which has elevations (140) and/or depressions which, for the fluid, form passages (141) from the inlet (13) to the cavity (103).

2. The facade element as claimed in claim 1, wherein the first flow distributor (14) has nozzles (141) through which the fluid is led into the cavity (103).

3. The facade element as claimed in either of claims 1 or 2, wherein the first flow distributor (14) has, in the flow direction, a plurality of inlet openings with a first opening angle (α) and an inlet path (L₁) and a plurality of outlet openings with a second opening angle (β) and an outlet path (L₂), wherein the first opening angle (α) is substantially greater than the second opening angle (β) and the inlet path (L₁) is substantially shorter than the outlet path (L₂).

4. The facade element as claimed in claim 1, wherein the strip (14) sealingly closes the two panes (101, 102) between inlet (13) and cavity (103) except for the passages (141).

5. The facade element as claimed in either of claims 1 to 4, wherein the elevations (140) have a droplet-shaped design.

6. The facade element as claimed in one of claims 1 to 5, wherein the strip (14) is produced from plastic or from a metal, in particular from aluminum.

7. The facade element as claimed in one of claims 1 to 6, wherein a plurality of inlets (13) are present which are arranged in a distributed manner along the first side of the panes (101, 102).

8. The facade element as claimed in one of claims 1 to 7, wherein the first side is the lowermost side of the facade element in its vertical use position.

9. The facade element as claimed in one of claims 1 to 8, wherein a second flow distributor (14') is arranged between cavity (103) and outlet (13').

10. The facade element as claimed in claim 9, wherein the second flow distributor (14') is designed identically to the first flow distributor (14) and is oriented identically or in a mirror-inverted manner.

11. The facade element as claimed in one of claims 1 to 10, wherein a plurality of outlets (13') are provided which are arranged in a distributed manner over the second side.

12. A facade element as claimed in one of claims 1 to 11, wherein the facade element comprises at least two panes (101, 102) arranged parallel to one another, a cavity (103) which is formed between these two panes (101, 102) and has fluid flowing through it, and at least one inlet (13) for feeding in a radiation-absorbing fluid and at least one outlet (13') for discharging the fluid, wherein the inlet (13) is arranged on a first side of the panes (101, 102) and the outlet (13') is arranged on an opposite, second side of the panes (101, 102), **characterized in that** a sealing ring (16) is arranged between the two panes (101, 102), which sealing ring delimits the cavity (103) and seals it outwardly, and **in that** a spacing between the two panes (101, 102) which is closed with an adhesive (120) is present between sealing ring (16) and outer side.

13. The facade element as claimed in claim 12, wherein the adhesive (120) is silicone or a two-component adhesive.

14. The facade element as claimed in either of claims 12 or 13, wherein the sealing ring (16) is a round cord.

15. The facade element as claimed in one of claims 1 to 14, wherein spacer elements (15, 15') are arranged in a distributed manner over the circumference of the two panes (101, 102), which elements are arranged in the cavity and/or between sealing ring (16) and adhesive (120) and/or within the adhesive (120).

## Revendications

1. Elément de façade pour l'isolation thermique avec au moins deux vitres (101, 102) disposées parallèlement l'une à l'autre, avec un espace creux (103) parcouru par un fluide, formé entre ces deux vitres (101, 102) ainsi qu'avec au moins une entrée (13) pour l'introduction d'un fluide absorbant le rayonnement et au moins une sortie (13') pour l'évacuation du fluide, dans lequel l'entrée (13) est disposée sur un premier côté des vitres (101, 102) et la sortie (13') est disposée sur un deuxième côté opposé des vitres (101, 102), dans lequel un premier distributeur d'écoulement (14) est disposé entre ladite au moins une entrée (13) et l'espace creux (103), lequel s'étend de façon répartie le long de la longueur du premier côté, **caractérisé en ce que** le distributeur d'écoulement (14) est une bande, qui présente des protubérances (140) et/ou des creux, qui forment des passages (141) pour le fluide depuis l'entrée (13) vers l'espace creux (103).

2. Elément de façade selon la revendication 1, dans lequel le premier distributeur d'écoulement (14) présente des buses (141), par lesquelles le fluide est conduit dans l'espace creux (103).

3. Elément de façade selon une des revendications 1 ou 2, dans lequel le premier distributeur d'écoulement (14) présente dans la direction d'écoulement plusieurs ouvertures d'entrée avec un premier angle d'ouverture (α) et un chemin d'entrée (L₁) et plusieurs ouvertures de sortie avec un deuxième angle d'ouverture (β) et un chemin de sortie (L₂), dans lequel le premier angle d'ouverture (α) est sensiblement plus grand que le deuxième angle d'ouverture (β) et le chemin d'entrée (L₁) est sensiblement plus court que le chemin de sortie (L₂).

4. Elément de façade selon la revendication 1, dans lequel la bande (14) obture de façon étanche les deux vitres (101, 102) entre l'entrée (13) et l'espace creux (103) jusqu'aux passages (141).

5. Elément de façade selon l'une quelconque des revendications 1 à 4, dans lequel les protubérances (140) sont réalisées en forme de gouttes.

6. Elément de façade selon l'une quelconque des revendications 1 à 5, dans lequel la bande (14) est fabriquée en matière plastique ou en un métal, en particulier en aluminium.

7. Elément de façade selon l'une quelconque des revendications 1 à 6, dans lequel il se trouve plusieurs entrées (13), qui sont réparties le long du premier côté des vitres (101, 102).

8. Elément de façade selon l'une quelconque des revendications 1 à 7, dans lequel le premier côté est le côté le plus bas de l'élément de façade dans sa position d'utilisation verticale.

9. Elément de façade selon l'une quelconque des revendications 1 à 8, dans lequel un deuxième distributeur d'écoulement (14') est disposé entre l'espace creux (103) et la sortie (13').

10. Elément de façade selon la revendication 9, dans lequel le deuxième distributeur d'écoulement (14') est réalisé de façon identique au premier distributeur d'écoulement (14) et il est orienté de façon identique ou symétrique par réflexion.

11. Elément de façade selon l'une quelconque des revendications 1 à 10, dans lequel il se trouve plusieurs sorties (13'), qui sont disposées de façon répartie sur le deuxième côté.

12. Elément de façade selon l'une quelconque des revendications 1 à 11, dans lequel l'élément de façade présente au moins deux vitres (101, 102) disposées parallèlement l'une à l'autre, un espace creux (103) parcouru par un fluide, formé entre ces deux vitres (101, 102), ainsi qu'au moins une entrée (13) pour l'introduction d'un fluide absorbant le rayonnement et au moins une sortie (13') pour l'évacuation du fluide, dans lequel l'entrée (13) est disposée sur un premier côté des vitres (101, 102) et la sortie (13') est disposée sur un deuxième côté opposé des vitres (101, 102), **caractérisé en ce qu'**un joint torique (16) est disposé entre les deux vitres (101, 102), lequel délimite l'espace creux (103) et le rend étanche vers l'extérieur, et **en ce qu'**il se trouve entre le joint torique (16) et le côté extérieur une distance entre les deux vitres (101, 102), qui est obturée avec une colle (120).

13. Elément de façade selon la revendication 12, dans lequel la colle (120) est le silicone ou une colle à deux composants.

14. Elément de façade selon l'une des revendications 12 ou 13, dans lequel le joint torique (16) est un cordon rond.

15. Elément de façade selon l'une quelconque des revendications 1 à 14, dans lequel des éléments d'écartement (15, 15') sont disposés de façon répartie sur le pourtour des deux vitres (101, 102), et sont disposés dans l'espace creux et/ou entre le joint torique (16) et la colle (120) et/ou à l'intérieur de la colle (120).
